# EUROPÄISCHE PATENTSCHRIFT

(11) **EP 1 274 601 B1**
(45) Veröffentlichungstag und Bekanntmachung des Hinweises auf die Patenterteilung: **13.04.2005**
(21) Anmeldenummer: 01929578.1
(22) Anmeldetag: 18.04.2001
(51) Int. Cl.: B60N 2/58

(54) **SITZBEZUG FÜR FAHR- UND FLUGZEUGSITZE ALLER ART**
SEAT COVER FOR ALL TYPES OF SEATS IN MOTOR VEHICLES OR PLANES
REVETEMENT DE SIEGE POUR SIEGES DE VEHICULE ET D'AVION DE TOUS TYPES

(30) Priorität: 18.04.2000 DE 10019246
(43) Veröffentlichungstag der Anmeldung: 15.01.2003
(73) Patentinhaber: Biermann, Ernst, 85101 Lenting (DE); Markfort, Thomas, 08523 Plauen (DE); Rau, Friedrich, Dr.-Ing, 08261 Schöneck (DE)
(72) Erfinder: BIERMANN, Ernst, 08547 Jössnitz (DE)
(74) Vertreter: von Puttkamer, Nikolaus, Dipl.-Ing.
(86) Internationale Anmeldenummer: PCT/EP2001/004411
(87) Internationale Veröffentlichungsnummer: WO 2001/079023

(56) Entgegenhaltungen:
- DE-A- 3 102 881
- DE-C- 19 805 173

## Beschreibung

Die Erfindung betrifft einen Sitzbezug für Fahr- und Flugzeugsitze aller Art nach dem Oberbegriff des Patentanspruches 1.

In der Automobilbranche ist es im Zusammenhang mit Sitzbezügen aus Leder bekannt, zur Verbesserung der Luftdurchlässigkeit in Ledermaterialien Perforationen vorzusehen. Dabei besteht ein Problem darin, daß die Anzahl der Perforationsdurchbrüche begrenzt ist, weil die Festigkeit des perforierten Ledermaterials bei einer steigenden Anzahl der Perforationsdurchbrüche absinkt. Ein weiteres Problem besteht darin, dass die sogenannte Zurichtung des Leders, die die Eigenschaften des Ledermaterials, beispielsweise im Hinblick auf die UV-Beständigkeit, die Formbeständigkeit und die Abriebfestigkeit bestimmt, im Bereich der Schnittflächen der ausgestanzten Perforationsdurchbrüche nicht mehr erhalten ist.

Aus der DE-A-3102881 ist eine Notsitzanordnung für ein Fahrzeug bekannt, die eine Bahn aus einem reißfesten, zusammenlegbaren Material umfasst, die zwischen vier Bodenhaken, die den Umfangsbereich der Sitzflächen definieren, und einer die Oberkante der Rückenlehne definierenden Querkante eingehängt wird. Die Bahn kann aus einem Geflecht, einem Netz oder einem anderen geeigneten Material, wie Kunstleder, bestehen.

In der DE-C-19805173 ist ein kompliziert aufgebauter und daher kostspieliger Fahrzeugsitz beschrieben, bei dem in das Polster Abluftkanäle eingearbeitet sind, die sich zwischen einer Ventilationsschicht bis zur Unter- oder Rückseite des Polsters erstrecken. Zur Belüftung sind elektrisch angetriebene Miniaturventilatoren vorgesehen, die Luft in die Ventilationsschicht einblasen, wobei die Luft aus der Ventilationsschicht in die Abluftkanäle strömt. Als Materialien für einen Polsterbezug, der über der gesamten Oberfläche gleichmäßig beschaffen ist, sind ein Textilstoff, perforiertes Leder oder Kunststoff genannt.

Die Aufgabe der vorliegenden Erfindung besteht daher darin, einen Sitzbezug für Fahr- und Flugzeugsitze aller Art zu schaffen, der bei einer vergleichsweise hohen Luft- und Dampfdurchlässigkeit eine relativ große Festigkeit besitzt.

Diese Aufgabe wird durch einen Sitzbezug mit den Merkmalen des Patentanspruches 1 gelöst.

Der wesentliche Vorteil des erfindungsgemäßen Sitzbezuges besteht darin, dass er einen Bereich aus geflochtenen Lederstreifen bzw. -schnüren oder dergleichen aufweist, der bei einer hohen Festigkeit eine hohe Luft- und Dampfdurchlässigkeit zur Bewirkung eines angenehmen Sitzklimas bewirkt. Die damit verbundene Dampfdurchlässigkeit der flexiblen und durchbrochenen Oberflächenstruktur schafft ideale Voraussetzungen für den Abtransport von Körperschweiß in die unter dem Geflecht befindlichen absorbierenden Materialien (Vließe, Schäume, Filze usw.).

Der permanente Luftaustausch sorgt dafür, daß Feuchtigkeits- und Temperaturstaus vermieden werden und somit das Behaglichkeitsgefühl gegenüber einer geschlossenen Oberfläche deutlich verbessert wird. Damit wird zweifelsfrei auch ein Beitrag in Richtung Komfort und Sicherheit geleistet, zumal bekannt ist, daß schweißnasse Körperpartien im Bereich Rücken und Gesäß durch mangelndes Behaglichkeitsgefühl unkonzentriertes Verhalten von Fahrzeugführern hervorrufen können.

Besonders bevorzugt weist daher der vorliegende, aus einem Ledermaterial bestehende Sitzbezug geflochtene Bereiche in denjenigen Zonen auf, in denen ein auf dem Sitzbezug sitzender Fahrer bzw. Fahrgast besonders stark mit dem Sitz in Kontakt gelangt. Dies gilt insbesondere für den wesentlichen Bereich der Sitzfläche und/oder der Rückenfläche.

Ein weiterer ganz wesentlicher Vorteil einer Weiterbildung der vorliegenden Erfindung besteht darin, dass die schnur- bzw. bandartigen Elemente, aus denen der geflochtene Bereich des vorliegenden Sitzbezuges gefertigt ist, so gestaltet sind, dass ihre seitlichen Kanten, die beim Herstellen der schnur- bzw. bandartigen Elemente aus einem mit der sogenannten Zurichtung versehenen Ledermaterial bzw. aus einer Lederhaut durch Schneide- oder Stanzoperationen entstehen, wegen der speziellen Gestaltung der schnur- bzw. bandartigen Elemente so verrundet bzw. umgebogen sind, dass die sogenannte Zurichtung, die beispielsweise für die UV-Beständigkeit, die Formbeständigkeit und die Abriebfestigkeit der Elemente des geflochtenen Bereiches bestimmend ist, erhalten bleibt. Beim Kontakt zwischen beispielsweise einer Jeans eines auf dem vorliegenden Sitzbezug sitzenden Fahrgastes oder Fahrers werden diese verrundeten Seitenkanten der genannten Elemente wegen ihrer abgerundeten Form daher in keiner bedeutsamen Weise durch grobe Nähte bzw. scharfe Ränder z.B. von aufgesetzten Taschen oder durch Nieten der Jeans mechanisch beansprucht. Zudem bleibt infolge der Verrundung die sogenannte Zurichtung der Elemente auch während des Gebrauchs, d.h. also während der gesamtem Lebensdauer, des erfindungsgemäßen Sitzbezuges erhalten.

Ein weiterer wesentlicher Vorteil besteht darin, dass infolge der Anordnung von in der vorliegenden Weise ausgestalteten, geflochtenen Bereichen in einem Sitzbezug, insbesondere an den zuvor genannten Kontaktbereichen, der gesamte Sitzbezug mit einem völlig neuartigen Dekor (z.B. Schachbrettmuster oder dergleichen) versehen werden kann, wenn die einzelnen schnur- bzw. bandartigen Elemente unterschiedliche Farben (z.B. Schwarz und Silbergrau) besitzen. Um eine Abstimmung des gesamten Innenraumes des Fahr- oder Flugzeuges auf die Sitzbezüge zu erreichen, können auch den geflochtenen Bereichen der Sitzbezüge entsprechende Bereiche im Fahrzeughimmel, im Armaturenbrett, in den Seitenverkleidungen, den Rückenlehnen, Abdeckungen und dergleichen des Fahr- oder Flugzeuges angebracht werden.

Besonders vorteilhaft ist es, dass die vorliegenden Sitzbezüge sowohl als Erstbezüge, wie auch als Nachrüstbezüge, d.h. Schonbezüge, Anwendung finden können.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
- Figur 1: in schematischer Darstellung einen Sitzbezug (Erstbezug oder Nachrüstbezug), der in den Kontaktflächen zum Fahrer bzw. Beifahrer geflochtene Bereiche aufweist;
- Figur 2: in vergrößerter Darstellung einen Ausschnitt des geflochtenen Bereiches des Sitzbezuges der Figur 1;
- Figuren 3 und 4: bevorzugte Ausgestaltungen der schnur- bzw. bandartigen Elemente des geflochtenen Bereiches; und
- Figuren 5 und 6: Weiterbildungen der Erfindung.

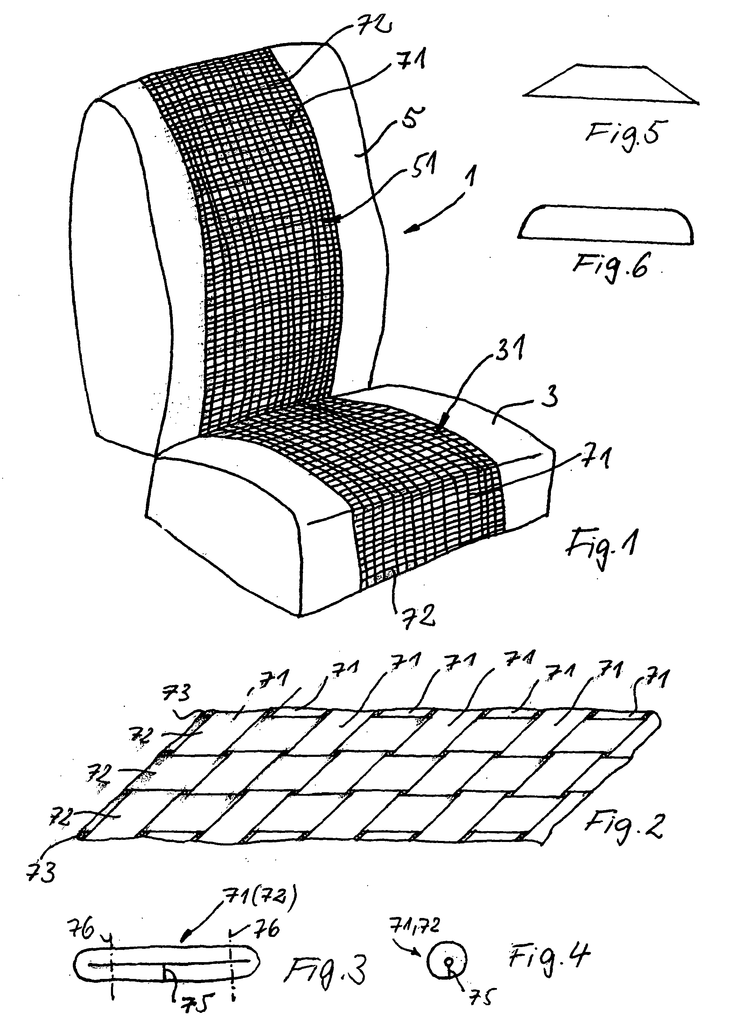

In der Figur 1 ist der vorliegende Sitzbezug eines Fahrzeug- oder Flugzeugsitzes mit 1 bezeichnet. Der Sitzbezug 1 umfaßt im wesentlichen ein das Sitzteil überdeckendes Bezugteil 3 sowie ein die Rückenlehne bedeckendes Bezugteil 5. In der erkennbaren Weise ist in allen oder nur in einem Teil der Kontaktflächen zu einer auf dem Sitz sitzenden Person, beispielsweise in der mittleren Zone des Bezugteiles 3 und/oder des Bezugteiles 5 ein geflochtener Bereich 31 bzw. 51 vorgesehen, der aus sich überkreuzenden, verflochtenen Elementen 71 und 72 besteht, die beispielsweise unter einem Winkel von 90° zueinander in Quer- bzw. Längsrichtung der Bezugteile 3 und/oder 5 verlaufen.

Es ist erkennbar, dass der gesamte Sitzbezug durch die Anordnung der geflochtenen Bereiche 31, 51 ein spezielles optisches Aussehen bzw. Design erhält. Dies gilt insbesondere dann, wenn die Elemente 71, 72 der geflochtenen Bereiche 31 bzw. 51 ein unterschiedliches optisches Aussehen besitzen, beispielsweise unterschiedlich, insbesondere zweifarbig gefärbt sind. So können z.B. die in Querrichtung verlaufenden Elemente 72 schwarz und die Längsrichtung verlaufenden Flechtelemente 71 silbergrau gefärbt sein. Das optische Aussehen läßt sich auch durch die Art der Verflechtung der Elemente 71, 72 gestalten.

Es wird darauf hingewiesen, dass zur Erzielung eines harmonischen Gesamteindruckes in einem Fahrgastraum eines Kraftfahrzeuges oder Flugzeuges geflochtene Bereiche, entsprechend den geflochtenen Bereichen 31 und/oder 51 auch in der Innenraumverkleidung des Kraftfahrzeuges oder Flugzeuges (z.B. im Himmel, der Seitenverkleidung, der Verkleidung des Armaturenbrettes etc.) vorgesehen sein können.

Die geflochtenen Bereiche werden an den Rändern von Aussparungen befestigt, vorzugsweise vernäht, die sich in dem Ledermaterial des Sitzbezuges 1 befinden.

In der Figur 2 ist ein vergrößerter Abschnitt der geflochtenen Bereiche 31 bzw. 51 schematisch dargestellt. In der erkennbaren Weise sind die sich überkreuzenden Elemente 71 und 72 auf einer Unterlage 73 angeordnet bzw. angeheftet, die aus einem luftdurchlässigen Material besteht. Beispielsweise besteht die Unterlage 73 aus einem Filz-, Vlies-, Watte- oder Schaummaterial, während die Elemente 71, 72 aus Leder bestehen. Durch das Material der Unterlage 73 wird eine Luftdurchlässigkeit der geflochtenen Bereiche 31, 51 sichergestellt.

Ein wesentliches Merkmal der vorliegenden Erfindung besteht darin, dass die Elemente 71, 72 so beschaffen sind, dass sie auch in ihren Kantenbereichen die sogenannte Zurichtung der Oberfläche des Ledermaterials besitzen, aus dem sie hergestellt sind. Diese sogenannte Zurichtung betrifft die Behandlung der Oberfläche des Lederausgangsmaterials, aus dem die Elemente beispielsweise durch Stanzen oder Schneiden herausgearbeitet werden. Normalerweise geht diese Zurichtung bei den Schnitt- bzw. Stanzoperationen im Bereich der dabei entstehenden Schnitt- oder Stanzkanten verloren, weil dort das Leder senkrecht zur behandelten Oberfläche geschnitten bzw. gestanzt wird. Die vorliegenden Erfindung sieht vor, dass beispielsweise gemäß Figur 3, die einen Querschnitt durch ein bandförmiges Element zeigt, das Element entlang seiner Längsränder verrundet ist, weil die Seitenbereiche der ausgeschnittenen bzw. ausgestanzten Elemente umgebogen werden, so dass die gebildeten Längsränder die Oberfläche und Zurichtung des Leders aufweisen. Vorzugsweise sind die Seitenbereiche der Elemente 71, 72 so weit umgebogen, dass ihre Enden an der Rückseite der Elemente am Ort 75 Stoß an Stoß aneinanderliegen. Um die umgeschlagenen und am Ort 75 aneinanderliegenden Seitenbereiche in der in der Figur 3 dargestellten Form zu halten sind sie vorzugsweise an der Innenfläche der Elemente befestigt, insbesondere verklebt. Bei einer alternativen Ausführungsform können die umgebogenen Seitenbereiche auch durch Vernähen (Nähte 76) befestigt sein.

Die Figur 4 zeigt eine Ausführungsform, bei der die Elemente 71, 72 schnurartig ausgebildet sind und einen etwa kreisrunden Querschnitt besitzen. Die Enden der umgeschlagenen Seitenbereiche der zunächst streifenförmigen Elemente sind ebenfalls an einem Ort 75 Stoß an Stoß befestigt, vorzugsweise verklebt.

Es wird darauf hingewiesen, dass auch andere, beispielsweise dreieckförmige oder ovale Querschnittsformen der Elemente 71, 72 möglich sind.

Gemäß den Figuren 5 und 6 ist es auch denkbar, anstatt der Herstellung der verrundeten Ränder der Elemente 71, 72 durch Umbiegen die schnur- bzw. bandförmigen Elemente aus einem Ausgangs-Ledermaterial derart auszuschneiden bzw. auszustanzen, dass die Ränder bei der Stanzoperation eine Schräge (Figur 5) bzw. abgerundete (Figur 6) Gestalt erhalten, die vor einer übermäßigen mechanischen Beanspruchung dann, wenn ein Fahrer bzw. Beifahrer auf dem geflochtenen Bereich (31 bzw. 51) sitzt, schützt. Da die Zurichtung in diesem Fall verlorengeht, sollte diese nach der Schneide- bzw. Stanzoperation in eigenen Verfahrensschritten an den Schnittflächen wiederhergestellt werden.

Im Zusammenhang mit der vorliegenden Erfindung ist es auch von Bedeutung, dass durch die Anordnung von geflochtenen Bereichen (31, 51) in Sitzbezügen aus Leder eine wesentlich bessere Ausnutzung der Ausgangsmaterialien (Häute) erfolgen kann. Während normalerweise beim Ausstanzen von relativ großflächigen Lederteilen zur Herstellung von Sitzbezügen eine etwa nur 60-%ige bis 65-%ige Ausnutzung der Ausgangsmaterialien möglich ist, weil diese Beschädigungen und z.B. unerwünschte Porigkeiten oder andere nicht tolerierbare Fehlermerkmale aufweisen, kann beim Ausstanzen der vorliegenden Elemente (71, 72), die relativ klein sind, eine weitaus größere Ausnutzung durch geeignete Anordnung der Stanzmesser unter Umgehung von Beschädigungen oder Porigkeiten etc. erfolgen kann. Dadurch wird eine sinnvolle und wirtschaftliche Ausnutzung der verfügbaren Resourcen erreicht.

## Patentansprüche

1. Sitzbezug für einen Fahrzeug- oder Flugzeugsitz aus einem Ledermaterial, **dadurch gekennzeichnet, dass** in dem Ledermaterial an wenigstens einer Stelle, die beim Gebrauch des Fahrzeugsitzes besonders beansprucht wird, ein aus schnur- oder bandartigen Elementen (71, 72) geflochtener Bereich (31, 51) angeordnet wird.

2. Sitzbezug nach Anspruch 1, **dadurch gekennzeichnet, dass** der geflochtene Bereich (31, 51) randseitig in einer Aussparung des Ledermaterials befestigt, vorzugsweise vernäht ist.

3. Sitzbezug nach Anspruch 1 oder 2, **dadurch gekennzeichnet, dass** der geflochtene Bereich (31) im mittleren Bereich eines das Sitzteil des Fahrzeugsitzes (1) überdekkenden Bezugteiles (3) angeordnet ist.

4. Sitzbezug nach einem der Ansprüche 1 bis 3, **dadurch gekennzeichnet, dass** der geflochtene Bereich (51) in einem mittleren Bereich eines die Rückenlehne des Fahrzeugsitzes (1) überdeckenden Bezugteiles (5) angeordnet ist.

5. Sitzbezug nach einem der Ansprüche 1 bis 4, **dadurch gekennzeichnet, dass** die Elemente (71, 72) des geflochtenen Bereiches zur Erzielung einer optischen Wirkung unterschiedlich gefärbt sind.

6. Sitzbezug nach Anspruch 5, **dadurch gekennzeichnet, dass** die in einer Richtung verlaufenden Elemente (71) des geflochtenen Bereiches (31, 51) anders gefärbt sind, als die in einer anderen Richtung verlaufenden Elemente (72) des geflochtenen Bereiches (31, 51).

7. Sitzbezug nach einem der Ansprüche 1 bis 6, **dadurch gekennzeichnet, dass** die Elemente (71, 72) des geflochtenen Bereiches auf einer Unterlage (73) aus einem luftdurchlässigen und feuchtigkeitstransportierenden Material angeordnet sind.

8. Sitzbezug nach Anspruch 7, **dadurch gekennzeichnet, dass** das luftdurchlässige Material aus Filz, Vlies, Watte oder Schaumstoff besteht.

9. Sitzbezug nach einem der Ansprüche 1 bis 8, **dadurch gekennzeichnet, dass** die Elemente (71, 72) des geflochtenen Bereiches (31, 51) aus einem Leder-Ausgangsmaterial ausgeschnitten oder ausgestanzt sind und dass die Seitenbereiche der Elemente (71, 72) zur Bildung von verrundeten Längsrändern umgebogen sind, wobei die umgebogenen Bereiche am Element (71, 72) befestigt, vorzugsweise verklebt oder vernäht sind.

10. Sitzbezug nach Anspruch 9, **dadurch gekennzeichnet, dass** die umgebogenen Seitenbereiche so bemessen sind, dass sie an der Rückseite des Elementes (71, 72) an einem Ort (75) aneinander stoßen.

11. Sitzbezug nach einem der Ansprüche 1 bis 10, **dadurch gekennzeichnet, dass** die Elemente (71, 72) einen kreisförmigen oder einen länglichen Querschnitt besitzen.

12. Sitzbezug nach einem der Ansprüche 1 bis 11, **dadurch gekennzeichnet, dass** die Elemente (71, 72) durch Schneiden oder Stanzen derart hergestellt sind, dass ihre seitlichen Schnittflächen eine schräge oder abgerundete Form besitzen.

13. Sitzbezug nach Anspruch 12, **dadurch gekennzeichnet, dass** die Schnitt- oder Stanzflächen der Elemente (71) mit der Zurichtung des Leder-Ausgangsmaterials versehen sind.

14. Sitzbezug nach einem der Ansprüche 1 bis 13, **dadurch gekennzeichnet, dass** weitere geflochtene Bereiche der Art der geflochtenen Bereiche (31, 51) in einem Fahrzeug- bzw. Flugzeuginnenraum an der Innenverkleidung bzw.-ausstattung angeordnet sind.

## Claims

1. Seat cover for a vehicle or aircraft seat made of a leather material, **characterized in that** an area (31, 51) woven from cord-like or tape-like elements (71, 72) is arranged in the leather material, at least at one point, which is exposed to particularly high stress when the vehicle seat is in use.

2. Seat cover in accordance with Claim 1, **characterized in that** the woven area (31, 51) is attached, preferably by stitching, laterally in a recess in the leather material.

3. Seat cover in accordance with Claims 1 or 2, **characterized in that** the woven area (31) is arranged in the central area of a part (3) of the cover which covers the seat cushion of the vehicle seat (1).

4. Seat cover in accordance with one of Claims 1 to 3, **characterized in that** the woven area (51) is arranged in the central area of a part (5) of the cover which covers the back rest of the vehicle seat (1).

5. Seat cover in accordance with one of Claims 1 to 4, **characterized in that** the elements (71, 72) of the woven area are differently coloured in order to achieve an optical effect.

6. Seat cover in accordance with Claim 5, **characterized in that** the elements (71) of the woven area (31, 51) running in one direction exhibit a different colour from the elements (72) of the woven area (31, 51) running in another direction.

7. Seat cover in accordance with one of Claims 1 to 6, **characterized in that** the elements (71, 72) of the woven area are arranged on a substrate (73) made of an air-permeable and moisture-conducting material.

8. Seat cover in accordance with Claim 7, **characterized in that** the air-permeable material consists of felt, fleece, wadding or foam.

9. Seat cover in accordance with one of Claims 1 to 8, **characterized in that** the elements (71, 72) of the woven area (31, 35) are cut or punched from a leather starting material, and **in that** the lateral areas of the elements (71, 72) are bent to form rounded longitudinal edges, whereby the bent areas are attached to the element (71, 72), preferably by gluing or stitching.

10. Seat cover in accordance with Claim 9, **characterized in that** the bent lateral areas are dimensioned in such a way that they abut with one another at a point (75) on the rear of the element (71, 72).

11. Seat cover in accordance with one of Claims 1 to 10, **characterized in that** the elements (71, 72) possess a circular or an oblong cross section.

12. Seat cover in accordance with one of Claims 1 to 11, **characterized in that** the elements (71, 72) are manufactured by cutting or punching in such a way that their lateral cut surfaces possess an angled or rounded form.

13. Seat cover in accordance with Claim 12, **characterized in that** the cut or punched surfaces of the elements (71) are provided with the finish of the leather starting material.

14. Seat cover in accordance with one of Claims 1 to 13, **characterized in that** additional woven areas similar to the woven areas (31, 51) are arranged on the interior trim or covering in a vehicle or aircraft interior.

## Revendications

1. Revêtement de siège pour un siège de véhicule ou un siège d'avion en cuir, **caractérisé par le fait que** dans le cuir, à au moins un endroit qui est particulièrement sollicité au cours de l'utilisation du siège, est disposée une zone (31, 51) tressée à partir d'éléments (71, 72) en forme de cordons ou de bandes.

2. Revêtement de siège selon la revendication 1, **caractérisé par le fait que** la zone (31, 51) tressée, au niveau des bords, est fixée dans une découpe du cuir, de préférence est cousue.

3. Revêtement de siège selon la revendication 1 ou 2, **caractérisé par le fait que** la zone (31) tressée est disposée dans la zone médiane d'une pièce de revêtement (3) qui recouvre l'assise du siège de véhicule (1).

4. Revêtement de siège selon une des revendications 1 à 3, **caractérisé par le fait que** la zone (51) tressée est disposée dans la zone médiane d'une pièce de revêtement (5) qui recouvre le dossier du siège de véhicule (1).

5. Revêtement de siège selon une des revendications 1 à 4, **caractérisé par le fait que** les éléments (71, 72) de la zone tressée sont teintés de couleur différente aux fins d'obtenir un effet optique.

6. Revêtement de siège selon la revendication 5, **caractérisé par le fait que** les éléments (71) de la zone tressée (31, 51) qui s'étendent dans une direction sont teintés d'une couleur différente de celle des éléments (72) de la zone tressée (31, 51) qui s'étendent dans l'autre direction.

7. Revêtement de siège selon une des revendications 1 à 6, **caractérisé par le fait que** les éléments (71, 72) de la zone tressée sont disposés sur une couche support (73) en un matériau perméable à l'air et assurant le passage de l'humidité.

8. Revêtement de siège selon la revendication 7, **caractérisé par le fait que** le matériau perméable à l'air est un feutre, un matériau non tissé, de la ouate ou un matériau expansé.

9. Revêtement de siège selon une des revendications 1 à 8, **caractérisé par le fait que** les éléments (71, 72) de la zone tressée (31, 51) sont découpés dans une pièce de cuir de base et **par le fait que** les zones de bord des éléments (71, 72) sont repliées pour former des bords longitudinaux arrondis, les zones repliées étant fixées à l'élément (71, 72), de préférence collées ou cousues.

10. Revêtement de siège selon la revendication 9, **caractérisé par le fait que** les zones repliées sont dimensionnées de telle sorte qu'elles se touchent mutuellement en un point (75) sur la face postérieure de l'élément (71, 72).

11. Revêtement de siège selon une des revendications 1 à 10, **caractérisé par le fait que** les éléments (71, 72) présentent une section transversale circulaire ou allongée.

12. Revêtement de siège selon une des revendications 1 à 11, **caractérisé par le fait que** les éléments (71, 72) sont fabriqués par découpage ou par poinçonnage, de telle sorte que leurs surfaces de coupe latérales présentent une forme biaise ou arrondie.

13. Revêtement de siège selon une des revendications 1 à 8, **caractérisé par le fait que** les surfaces de découpage ou de poinçonnage des éléments (71) sont pourvues de l'apprêt du cuir de base.

14. Revêtement de siège selon une des revendications 1 à 13, **caractérisé par le fait que** d'autres zones tressées de même type que les zones tressées (31, 51) sont disposées dans l'habitacle du véhicule ou de l'avion dans l'habillage intérieur ou l'aménagement intérieur.
